Europäisches Patentamt

European Patent Office

Office européen des brevets

(19)

(11) Veröffentlichungsnummer: **0 176 803**
**A1**

(12) # EUROPÄISCHE PATENTANMELDUNG

(21) Anmeldenummer: **85111277.1**

(22) Anmeldetag: **06.09.85**

(51) Int. Cl.⁴: **B 22 D 19/08**
**C 23 C 26/02**

(30) Priorität: **27.09.84 DE 3435460**

(43) Veröffentlichungstag der Anmeldung:
**09.04.86 Patentblatt 86/15**

(84) Benannte Vertragsstaaten:
**DE FR GB IT SE**

(71) Anmelder: **M.A.N. MASCHINENFABRIK
AUGSBURG-NÜRNBERG Aktiengesellschaft
Dachauer Strasse 667 Postfach 50 06 20
D-8000 München 50(DE)**

(72) Erfinder: **Amende, Welf, Dr.
Sonnentaustrasse 14a
D-8000 München 50(DE)**

(54) Verfahren zur Herstellung von Werkstücken aus Leichtmetall.

(57) Es wird ein Verfahren beschrieben, bei dem ein Werkstück, beispielsweise ein Motorblock mit einer leicht gießbaren Aluminium-Legierung gegossen wird und anschließend zur Erhöhung der Verschleißfestigkeit zumindest teilweise in Randschichten nachbehandelt wird. Die Nachbehandlung besteht darin, die Randschicht mit einem härtenden Matertial, z.B. Silizium zu bestreichen und anschließend beispielsweise mit einem Laserstrahl aufzuschmelzen, so daß das härtende Material in die Randschicht gelangt.

EP 0 176 803 A1

M.A.N. MASCHINENFABRIK AUGSBURG-NÜRNBERG
Aktiengesellschaft
gü/sd

München, 25. September 1984

## Verfahren zur Herstellung von Werkstücken aus Leichtmetall

Die Erfindung bezieht sich auf ein Verfahren zur Herstellung von verschleißfesten Gußwerkstücken aus Leichtmetall.

Verschleißausgesetze Bauteile, wie z.B. Zylinderblöcke eines Verbrennungsmotors, Wellen und dergleichen werden im allgemeinen aus verschleißfesten Materialien hergestellt, insbesondere aus Gußeisen bzw. Stahl.

Der Einsatz von Metallen oder Legierungen mit möglichst geringem spezifischen Gewicht gewinnt zunehmend an Bedeutung. Nachdem derartige Metalle im allgemeinen eine geringe Festigkeit besitzen, werden sie durch Zusätze von härtenden Legierungskomponenten veredelt.

Obwohl Aluminium-Legierungen im allgemeinen leicht zu vearbeiten sind, ist das Gießen von derartigen Legierungen problematisch, wenn zur Erlangung einer höheren Verschleißfestigkeit eine härtende Komponente bzw. Komponenten mit höherem Anteil zugesetzt werden. Die Schwierigkeit ist auf die großen Unterschiede der Schmelztemperaturen zwischen dem Leichtmetall und den härtenden Komponenten zurückzuführen.

7.2267

Der Erfindung liegt die Aufgabe zugrunde, ein Verfahren zu schaffen, mit dem verschleißfeste Gußwerkstücke aus Leichtmetall herstellbar sind.

Die Aufgabe wird erfindungsgemäß durch die im Anspruch 1 gekennzeichneten Merkmale gelöst.

Hierdurch ist es möglich, eine hohe Festigkeit auch bei einfach herstellbaren Gußwerkstücken aus Leichtmetall zu erreichen. Für das Werkstück kann daher eine nach anderweitigen Gesichtspunkten gewählte Legierung verwendet werden, die leicht im Gußverfahren zu verarbeiten ist, d.h. die eher weich als hart ist. Durch das Einschmelzen von härtenden Komponenten werden nachträglich die Bereiche des Werkstückes veredelt, die einer Reibung ausgesetzt werden sollen.

Vorzugsweise besteht der Guß aus einer leicht gießbaren Aluminium-Legierung, wobei als härtendes Material Silizium eingeschmolzen wird.

Gemäß einer weiteren Ausgestaltung der Erfindung wird das härtende Material mit einem Laserstrahl eingeschmolzen. Dieses hat den Vorteil, daß das Werkstück nicht im ganzen aufgeheizt werden muß, und daß die zu veredelnden Bereiche geometrisch genau definiert werden können.

Mit einem Laserstrahl lassen sich auch Hohlräume, wie z.B. die Zylinder eines Zylinderblockes behandeln.

7.2267
25.09.1984

0176803

Bei dem erfindungemäßen Verfahren wird das Werkstück in einer Randschicht gehärtet. Diese Schicht kann je nach Anwendung eine geringere Schichtdicke erhalten, wenn beispielsweise das Werkstück nur Reibungskräften ausgesetzt ist, oder durch eine tiefere Aufschmelzung eine größere Schichtdicke haben, beispielsweise wenn Drucklasten auferlegt werden.

Bei der Herstellung eines Motorblockes wurde dieser mit einer AlSi12CuNiMg-Gußlegierung nach üblichem Verfahren gegossen. Auf die Innenseite der Zylinder wurde anschließend Silizium aufgestrichen. Mit einem Laserstrahl wurde dieser Bereich mit einer Geschwindigkeit von etwa 10mm/sec. bahnenweise durchstreift. Der auf diese Weise aufgeschmolzene Bereich wurde durch Selbstabschreckung abgekühlt.

Es konnte festgestellt werden, daß das Silizium in der aufgeschmolzenen Randschicht vorliegt und dieser Bereich von wahlweise 0,3 bis 1,5 mm Dicke eine übereutektische Legierung, d.h. eine Zone mit vorwiegend Silizium bildet, die eine hohe mechanische Beständigkeit aufweist.

7.2267
25.09.1984

M.A.N. MASCHINENFABRIK AUGSBURG-NÜRNBERG
Aktiengesellschaft
gü/sd                          4

München, 25. September 1984

P a t e n t a n s p r ü c h e

1. Verfahren zur Herstellung von verschleißfesten Gußwerkstücken aus Leichtmetall, dadurch gekennzeichnet, daß das Werkstück nach
einem bekannten Verfahren aus leicht gießbarem
Leichtmetall gegossen wird, und daß anschließend
ein härtendes Material mindestens in Teilbereiche
des Werkstückes eingeschmolzen wird.

2. Verfahren nach Anspruch 1, dadurch gekennzeichnet,
daß das Leichtmetall eine leicht gießbare Aluminium-Legierung ist.

3. Verfahren nach Anspruch 1 oder 2, dadurch gekennzeichnet, daß das härtende Material Silizium
ist.

4. Verfahren nach einem der vorhergehenden Ansprüche,
dadurch gekennzeichnet, daß das härtende Material
mit Laserstrahlen eingeschmolzen wird.

7.2267

**EUROPÄISCHER RECHERCHENBERICHT**

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | DE-A-2 740 569 (FORD) <br> * Seite 18, Absatz 3 - Seite 19 * | 1-4 | B 22 D 19/08 <br> C 23 C 26/02 |
| X | EP-A-0 092 683 (FIAT) <br> * Seite 4, Absatz 2 - Seite 3, Absatz 1 * | 1,2,4 | |
| X | FR-A-2 166 360 (K. SCHMIDT GmbH) <br> * Seite 2 * | 1,2,4 | |
| A | FR-A-2 430 286 (CENTRO RICERCHE FIAT S.p.A.) | | |
| A | THIN SOLID FILMS, Band 84, Nr. 4, Oktober 1981, Seiten 323-331, Lausanne, CH; J.D. AYERS: "Modification of metal surfaces by the laser melt-particle injection process" <br> * Seiten 327-330 * | | **RECHERCHIERTE SACHGEBIETE (Int Cl 4)** <br><br> B 22 D <br> C 23 C |

Der vorliegende Recherchenbericht wurde für alle Patentansprüche erstellt.

| Rechercheort <br> DEN HAAG | Abschlußdatum der Recherche <br> 29-11-1985 | Prüfer <br> STEIN K.K. |
|---|---|---|